# EUROPÄISCHE PATENTSCHRIFT

(11) **EP 3 338 532 B1**
(45) Veröffentlichungstag und Bekanntmachung des Hinweises auf die Patenterteilung: **04.03.2020**
(21) Anmeldenummer: 17208527.6
(22) Anmeldetag: 19.12.2017
(51) Int. Cl.: A01D 90/10, A01F 25/18, A01C 3/06

(54) **LANDWIRTSCHAFTLICHER ERNTEGUTWAGEN SOWIE VERFAHREN ZUM ENTLADEN EINES SOLCHEN ERNTEGUTWAGENS**
AGRICULTURAL CROP CARRIAGE AND METHOD FOR UNLOADING SUCH A CROP CARRIAGE
ENGIN DE RÉCOLTE AGRICOLE AINSI QUE PROCÉDÉ DE DÉCHARGEMENT D'UN TEL ENGIN DE RÉCOLTE

(30) Priorität: 23.12.2016 DE 102016015517; 28.04.2017 DE 102017004181
(43) Veröffentlichungstag der Anmeldung: 27.06.2018
(73) Patentinhaber: PÖTTINGER Landtechnik GmbH, 4710 Grieskirchen (AT)
(72) Erfinder: Prechtl, Wolfgang, 4722 Peuerbach (AT); Preimeß, Hans-Jörg, 9811 Lendorf (AT); Zweimüller, Manuel, 4743 Peterskirchen (AT)
(74) Vertreter: Thoma, Michael

(56) Entgegenhaltungen:
- EP-A1- 3 078 256
- DE-A1- 3 232 905
- DE-A1- 19 612 053
- DE-A1- 19 704 457
- DE-U1-202012 006 091

## Beschreibung

Die vorliegende Erfindung betrifft allgemein die Erzeugung eines Erntegutteppichs in einem Fahrsilo. Die Erfindung betrifft dabei einerseits einen landwirtschaftlichen Erntegutwagen mit einem Laderaum zum Aufnehmen von Erntegut, einem Entladeförderer zum Entladen des Ernteguts aus dem Laderaum, sowie einer Breitenverteilvorrichtung zum Querverteilen des Ernteguts beim Abladen aus dem Laderaum. Die Erfindung betrifft andererseits ein Verfahren zum Entladen eines solchen Erntegutwagens zum Erzeugen eines Erntegutteppichs in einem Fahrsilo, bei dem durch den Entladeförderer aus dem Laderaum des Erntegutwagens Erntegut entladen wird, während der Erntegutwagen entlang eines Fahrwegs durch das Fahrsilo gefahren wird.

Solche Erntegutwagen sind beispielsweise aus den Schriften DE 20 2012 006 091 41 U1 und DE 32 32 905 A1 bekannt.

Um in einem Fahrsilo nachfolgende Bearbeitungsschritte wie Verteil- und Walzarbeiten effizient durchführen zu können bzw. die hierfür notwendige Zeit zu reduzieren, ist es beim Abladen des Ernteguts im Fahrsilo wichtig, einen möglichst gleichmäßigen Erntegutteppich abzuladen. Der Erntegutteppich soll dabei entlang des Fahrwegs durch das Silo einerseits eine möglichst gleichbleibende Teppichdicke und andererseits eine möglichst gleichbleibende Teppichbreite besitzen, wobei die gleichbleibende Teppichdicke auch über mehrere Fahrgassen hinweg eingehalten werden soll, um eine insgesamt gleichmäßige Silomatte zu erzeugen. Die Teppichbreite soll zumindest entlang einer Fahrgasse gleichbleibend sein, um in der nächsten Fahrgasse bündig anschließen zu können.

Das Ablegen eines solchermaßen gleichmäßigen Erntegutteppichs benötigt einen erfahrenen Schlepperfahrer und ist auch mit Erfahrung nicht ganz einfach, da anhand der Fahrsilolänge und der geladenen Erntegutmenge abgeschätzt werden muss, welche Entladevorschubgeschwindigkeit gewählt wird und mit welcher Fahrgeschwindigkeit dabei durch das Fahrsilo gefahren wird, um die gesamte Lademenge gleichmäßig über den Fahrweg einer Fahrgasse oder ggf. mehreren Fahrgassen abzuladen.

Das gleichmäßige Abladen wird dabei weiter erschwert, wenn für verschiedene Erntegutzusammensetzungen verschiedene Teppichdicken gewünscht sind oder auch unterschiedliche Teppichbreiten in einer Fahrgasse abzulegen sind, was die Komplexität für den Schlepperführer noch erhöht.

In jüngerer Zeit sind nämlich Erntegutwagen bekannt geworden, bei denen das Erntegut beim Abladen in der Breite verteilt wird, wobei die hierfür vorgesehenen Breitenverteilvorrichtungen in verschiedenen Setups bzw. Einstellungen gefahren werden können, um verschiedene Teppichbreiten zu erzielen. Hintergrund dieser Breitenverteile war es ursprünglich, den aus dem Laderaum austretenden Erntegutstrom auf die Fahrwerksbreite auseinander zu ziehen, um das Fahrsilo bis zu dessen Seitenbegrenzungswänden befüllen zu können. Da die Reifen des Erntegutwagens üblicherweise seitlich über den Laderaum überstehen, bleibt die Abladeöffnung des Laderaums ein Stück weit von der Fahrsilobegrenzung beabstandet, selbst wenn mit dem Reifen des Erntegutwagens exakt an der Fahrsilobegrenzung entlanggefahren wird.

Die Schrift EP 3 078 256 A1 zeigt einen Erntegutwagen mit einer solchen Breitenverteilvorrichtung, die die Teppichbreite auf die Fahrspur des Fahrwerks auseinanderzieht. Die genannte Breitenverteilvorrichtung soll dabei einerseits an der Heckklappe V-förmig angestellte Führungsleisten aufweisen, die das an der Innenseite der Entladeklappe vorbeistreifende Erntegut auseinanderziehen. Zudem sollen die Dosierwalzen der heckseitig vorgesehenen Dosiervorrichtung mit schräg angestellten Förderzinken versehen sein, um im Bereich der Dosiervorrichtung eine weitere Querförderwirkung zu erzielen. Zur Einstellung verschiedener Teppichbreiten können unterschiedlich lange V-Leisten montiert werden oder seitliche Führungsklappen an den Rändern der Entladeklappe verschwenkt werden. Die durch das Umrüsten erzielbare Teppichbreite ist jedoch schwierig vorherzusagen und erhöht die Anforderungen an die Erfahrung des Schlepperführers nochmals weiter.

Hiervon ausgehend liegt der vorliegenden Erfindung die Aufgabe zugrunde, einen verbesserten Erntegutwagen sowie ein verbessertes Verfahren zu dessen Entladen anzugeben, die Nachteile des Standes der Technik vermeiden und letzteren in vorteilhafter Weise weiterbilden. Insbesondere soll eine gleichmäßige Erntegutmatte über die Silolänge in effizienter Weise und mit geringeren Anforderungen an die Erfahrung des Schlepperfahrers ermöglicht und damit der Zeitaufwand für nachfolgende Verteil- und Walzarbeiten verringert werden.

Erfindungsgemäß wird die genannte Aufgabe durch einen Erntegutwagen nach Anspruch 1 sowie ein Verfahren nach Anspruch 14 gelöst. Bevorzugte Ausgestaltungen der Erfindung sind Gegenstand der abhängigen Ansprüche.

Erfindungsgemäß weist der Erntegutwagen eine verstellbare Breitenverteilvorrichtung auf, mittels derer die Breite des abgelegten Erntegutteppichs aktiv beim Abladen des Ernteguts einstellbar ist. Die genannte Breitenverstellvorrichtung kann dabei vorteilhafterweise im Betrieb des Erntegutwagens, insbesondere im Fahrbetrieb und/oder im Entladebetrieb, verstellt werden, um sozusagen online bzw. on the job die Breite des abgelegten Erntegutteppichs verändern zu können bzw. genauer gesagt die Verteilwirkung der Breitenverteilvorrichtung verändern zu können, um die Breite des Erntegutteppichs auch bei variierenden Betriebsbedingungen wie Erntegutanhäufungen, Löchern im Futterstock, Variationen bei der Entladegeschwindigkeit etcetera gleichmäßig bzw. konstant halten zu können.

Die Breitenverteilvorrichtung umfasst aktiv verstellbare Verteil mittel. Diese aktiv verstellbaren Verteilmittel können bspw. an der Innenseite der Entladeklappe angebrachte Führungsleisten oder -profile sein, denen Stellaktoren zugeordnet sind, mittels derer die Position und/oder Länge und/oder Anstellwinkel der Führungsleisten verstellt werden kann. Insbesondere kann ein V-Winkel, in dem die Führungsleisten angeordnet sind, stellaktorisch in seiner Größe verändert werden, sodass die Führungsleisten das Erntegut, das entlang der Innenseite der Entladeklappe abgeladen wird, stärker oder weniger stark aufspreizen bzw. in die Breite ziehen.

Bei dem erfindungsgemäßen Erntegutwagen weisen die die Verteilmittel zumindest einen aktiven Querförderer auf, bspw. in Form eines Schneckenförderers, der je nach Drehrichtung das Erntegut beim Abladen zu einem schmäleren Schwad bzw. schmäleren Teppich oder zu einem breiteren Teppich querfördert.

Ein solcher aktiver Querförderer kann aber auch ein Querförderband oder mehrere Querförderbänder umfassen, mittels derer der aus dem Laderaum austretende Erntegutstrom auseinandergezogen oder zusammengefahren werden kann. Alternativ oder zusätzlich zu einem solchen Förderband kann der Querförderer auch zumindest eine Rechkreiseleinheit mit umlaufend antreibbaren Rechkreiseln aufweisen, mit Hilfe derer das Erntegut auseinander gezogen oder zusammengefahren werden kann, wenn es aus dem Laderaum austritt.

Ein solcher Querförderer kann insbesondere in einem unteren Endabschnitt der Entladeklappe angeordnet sein, wobei der genannte Querförderer an der Entladeklappe selbst befestigt oder einem separaten Rahmenteil befestigt sein kann, mittels dessen der Querförderer am unteren Endbereich der Entladeklappe positioniert werden kann. Insbesondere kann der genannte Querförderer den tiefsten Punkt der Entladeklappe bilden und/oder dort angeordnet sein.

Alternativ oder zusätzlich kann ein Querförderer der genannten Art auch im Bereich des Laderaumbodens im Bereich der Laderaumentladeöffnung vorgesehen sein, insbesondere an einem Endabschnitt des Laderaumbodens, der die Entladekante bildet. Vorteilhafterweise kann ein solcher am Laderaumboden vorgesehener Querförderer unter dem Laderaumboden angeordnet bzw. befestigt sein. Vorteilhafterweise kann ein solcher Querförderer im Bereich des Laderaumbodens zwischen einer Inaktivstellung, in der der Querförderer unter dem Laderaumboden geparkt ist, und einer Aktivstellung, in der der Querförderer im Bereich des aus dem Laderaum austretenden, entladenen Ernteguts angeordnet ist, hin und her bewegt werden. In der besagten Aktivstellung kann der Querförderer beispielsweise über den Laderaumboden vorstehen, wobei der Querförderer immer noch unterhalb des Laderaumbodens oder auch näherungsweise auf dem Niveau des Laderaumbodens angeordnet sein kann.

Vorteilhafterweise kann die Entladeklappe selbst in sich verstellbar ausgebildet sein und/oder verschiedene, zueinander verstellbare, insbesondere abklappbare Abschnitte besitzen. Insbesondere kann ein unterer Endabschnitt der Entladeklappe relativ zu einem darüberliegenden Klappenabschnitt verschwenkbar sein, insbesondere um eine liegende Querachse. An dem verschwenkbaren Klappenteil kann der vorgenannte Querförderer angeordnet sein, bspw. um im Entladebetrieb nach unten in eine aktive Stellung geschwenkt zu werden und im Fahrbetrieb nach vorne oder hinten und/oder nach oben geschwenkt werden zu können, um die Bodenfreiheit nicht zu beschränken.

Durch Verstellen der Position des genannten Klappenabschnitts und/oder des Querförderers, insbesondere der Höhe des Querförderers über dem Boden kann die Querförderwirkung und damit die Breite des Erntegutteppichs beeinflusst werden. Bei dem erfindungsgemäßen Erntegutwagen kann die Vorschubgeschwindigkeit des Querförderers, insbesondere die Drehzahl des Schneckenförderers und/oder des Förderrotors variiert werden, um die Querförderwirkung und damit die Teppichbreite zu beeinflussen.

Die verstellbaren Parameter der Breitenverteilvorrichtung, insbesondere der Spreizwinkel der Führungsleisten und/oder die Position der Führungsleisten und/oder die Vorschubgeschwindigkeit des Querförderers und/oder die Position des Querförderers können in vorteilhafter Weiterbildung der Erfindung durch eine Entladesteuervorrichtung automatisch oder halbautomatisch gesteuert werden, wobei die Steuerung in Abhängigkeit einer vorwählbaren Teppichbreite und/oder in Abhängigkeit einer vorwählbaren Fahrsilolänge erfolgen kann. Berechnet die Entladesteuervorrichtung bspw. anhand der abzuladenden Erntegutmenge, einer bestimmten Fahrsilolänge und einer gewünschten Teppichdicke in der vorgenannten Weise die Entladevorschubgeschwindigkeit und die Fahrgeschwindigkeit kann die Entladesteuervorrichtung die Teppichbreite dazu passend auswählen, um die Erntegutmenge über die vorgegebene Fahrsilolänge in der gewünschten Dicke ablegen zu können. Alternativ oder zusätzlich können auch umgekehrt Entladeparameter wie die Entladevorschubgeschwindigkeit und/oder die Fahrgeschwindigkeit durch die Entladesteuervorrichtung automatisch an die Teppichbreite angepasst werden.

Ferner wird vorgeschlagen, den Entladevorgang im Silo zumindest teilweise zu automatisieren und die Vorschubgeschwindigkeit des Entladeförderers und die Fahrgeschwindigkeit des Erntegutwagens mittels einer Entladesteuervorrichtung aufeinander abzustimmen, sodass der Schlepperführer den Entladeförderer und die Fahrgeschwindigkeit nicht mehr per Gefühl aneinander anpassen muss. Nach einem Aspekt der vorliegenden Erfindung ist vorgesehen, dass die Entladesteuervorrichtung die Entladevorschubgeschwindigkeit des Entladeförderers in Abhängigkeit der Fahrgeschwindigkeit des Erntegutwagens automatisch steuert und/oder die Fahrgeschwindigkeit in Abhängigkeit der Entladevorschubgeschwindigkeit automatisch steuert. Die genannte Entladesteuervorrichtung kann also in die Fahrgeschwindigkeit des Schleppers und/oder in die Vorschubgeschwindigkeit des Entladeförderers eingreifen, um einen gleichmäßigen Futterteppich über die Silolänge zu erzeugen. Das von der Entladesteuervorrichtung generierte Entladevorschubgeschwindigkeitssignal und/oder Fahrgeschwindigkeitssignal kann dabei vollautomatisch in eine entsprechende Entladevorschubgeschwindigkeit und/oder Fahrgeschwindigkeit umgesetzt werden, so dass die Entladesteuervorrichtung den Entladeförderer und/oder die Fahrgeschwindigkeit des Erntegutwagens aktiv und selbständig steuert. Alternativ kann das von der Entladesteuervorrichtung generierte Entladevorschubgeschwindigkeitssignal und/oder Fahrgeschwindigkeitssignal auch nur halbautomatisch umgesetzt werden, insbesondere in Form eines Vorschlags- und/oder Korrektursignals, das dem Maschinenführer auf einem Display oder anderen Anzeigemitteln angezeigt wird, so dass der Fahrer dann die Entladevorschubgeschwindigkeit und/oder Fahrgeschwindigkeit an das generierte Sollsignal anpassen kann.

Die Entladevorschubgeschwindigkeit und/oder die Fahrgeschwindigkeit über die Silolänge kann dabei in verschiedener Weise bestimmt bzw. vorgegeben werden. In Weiterbildung der Erfindung kann die Entladesteuervorrichtung die Entladevorschubgeschwindigkeit und/oder die Fahrgeschwindigkeit aus vorgebbaren oder auswählbaren Silo- und/oder Betriebsgrößen berechnen, nämlich insbesondere aus der Silolänge bzw. der Länge des Fahrwegs und/oder aus der abzuladenden Erntegutmenge. Vorzugsweise kann die Entladesteuervorrichtung Eingabemittel zum Eingeben der Silolänge aufweisen, bspw. in Form eines Keyboards oder eines Touchscreens. Die abzuladende Erntegutmenge kann bspw. anhand des Laderaumvolumens geschätzt werden und insofern ein spezifischer, vorgegebener Parameter des Erntegutwagens sein. Eine solche Abschätzung beruht auf der Annahme, dass der Laderaum regelmäßig vollständig bzw. mit einem bestimmten Füllgrad beladen wird. Alternativ oder zusätzlich kann die Entladesteuervorrichtung auch Eingabemittel zum Eingeben der abzuladenden Erntegutmenge und/oder der im Laderaum geladenen Erntegutmenge und/oder des Füllgrads besitzen. Alternativ oder zusätzlich kann auch eine Erfassungseinrichtung zum Erfassen der im Laderaum aufgenommenen und damit abzuladenden Erntegutmenge aufweisen, bspw. in Form einer geeigneten Sensorik, die einen Gewichtssensor und/oder einen Füllstandsensor umfassen kann.

Aus den vorwählbaren Größen Fahrweglänge bzw. Silolänge und abzuladender Erntegutmenge kann die Entladesteuervorrichtung automatisch die passende Entladevorschubgeschwindigkeit des Entladeförderers und die dazu passende Fahrgeschwindigkeit berechnen. Alternativ kann die Entladesteuervorrichtung auch nur ein Verhältnis zwischen Fahrgeschwindigkeit und Entladevorschubgeschwindigkeit berechnen, um eine der beiden Größen in Abhängigkeit der anderen, vom Schlepperführer gewählten Größe zu steuern. Beispielsweise kann der Schlepperführer weiterhin die Fahrgeschwindigkeit manuell wählen, wobei dann die Entladesteuervorrichtung aus der Silolänge und der Erntegutmenge die passende Entladevorschubgeschwindigkeit steuert. Alternativ wäre es auch möglich, dass der Schlepperführer die Vorschubgeschwindigkeit des Entladeförderers manuell wählt, wobei dann die Entladesteuervorrichtung die Fahrgeschwindigkeit passend steuert, um den gewünschten Futterteppich abzuladen.

In Weiterbildung der Erfindung kann die Entladesteuervorrichtung dabei für die Entladevorschubgeschwindigkeit Grenzen in Abhängigkeit anderer Betriebsparameter vorsehen, bspw. unter Berücksichtigung der maximalen Belastung des Entladeförderers und/oder in Abhängigkeit der maximal zulässigen Belastung einer Dosiervorrichtung, die an der Entladeöffnung des Laderaums angeordnet sein kann. Eine solche Dosiervorrichtung kann bspw. einen oder mehrere angetriebene Dosierrotoren, bspw. in Form von Zinkenwalzen, oder auch Förderschnecken umfassen, wobei die Leistungsaufnahme der Dosiervorrichtung mittels einer geeigneten Erfassungseinrichtung erfasst werden kann. Wenn die erfasste Leistungsaufnahme der Dosiervorrichtung eine vorbestimmte Belastungsgrenze erreicht, kann die Entladevorschubgeschwindigkeit begrenzt oder reduziert werden.

Der genannte Entladeförderer, dessen Entladevorschubgeschwindigkeit gesteuert oder geregelt wird, kann insbesondere dem Ladebodenraum zugeordnet sein, wobei insbesondere ein antreibbarer Kratzboden oder ein antreibbarer Förderboden in Form eines Förderbands oder eines Kettenförderers vorgesehen sein kann.

Alternativ oder zusätzlich zum genannten Vorwählen relevanter Silo- und/oder Betriebsgrößen und dem genannten Berechnen der Vorschubgeschwindigkeit und/oder der Fahrgeschwindigkeit kann nach einem weiteren vorteilhaften Aspekt der Erfindung die Entladesteuervorrichtung auch einen Teach In-Modus aufweisen, in dem bei einem manuell gesteuerten Entladevorgang die Entladevorschubgeschwindigkeit des Entladeförderers und/oder die Fahrgeschwindigkeit des Schleppers über die Silolänge kontinuierlich oder zyklisch oder in Abständen erfasst wird und in einem Entladeprofil gespeichert werden, wobei ein solcher Teach In-Betrieb vorteilhafterweise durch einen erfahrenen Schlepperführer vorgenommen wird und/oder im Nachgang kontrolliert werden kann, ob der abgelegte Erntegutteppich die gewünschte Gleichmäßigkeit und/oder Dicke und/oder Breite hat. In einem nachfolgenden Abladebetrieb kann die Entladesteuervorrichtung im Automatik- oder Halbautomatikmodus arbeiten, wobei die Entladevorschubgeschwindigkeit und/oder die Fahrgeschwindigkeit anhand des gespeicherten Teach In-Profils gesteuert werden kann. Die Entladesteuervorrichtung kann sich insbesondere die Länge des Fahrwegs, die über den Fahrweg gewählte Fahrgeschwindigkeit und die dabei eingestellte Vorschubgeschwindigkeit "merken" und bei einem nachfolgenden Entladevorgang die entsprechende Betriebsgrößen vollautomatisch steuern oder für eine halbautomatische Steuerung entsprechende Sollsignale für die Fahrgeschwindigkeit und/oder die Vorschubgeschwindigkeit vorgeben.

Alternativ oder zusätzlich kann die Entladesteuervorrichtung auch als Feedbacksteuerung ausgebildet sein oder einen Regler umfassen, um die Betriebsparameter so einzuregeln, dass ein gleichmäßiger Erntegutteppich gewünschter Dicke und/oder gewünschter Breite erzielt wird. Dabei kann eine Erfassungsvorrichtung vorgesehen sein, die den abgelegten Erntegutteppich erfasst, sodass die Entladesteuervorrichtung bzw. deren Regler anhand erfasster Erntegutteppich-Parameter den Abladeprozess steuern kann, insbesondere die Entladevorschubgeschwindigkeit und die Fahrgeschwindigkeit und/oder deren Abstimmung aufeinander. Die genannte Erfassungsvorrichtung kann bspw. einen optischen Sensor oder eine Kamera oder einen Ultraschallsensor oder eine andere geeignete Sensorik umfassen, um die Breite und/oder Dicke des abgelegten Erntegutteppichs zu bestimmen. Anhand der erfassten Dicke und/oder Breite des abgelegten Erntegutteppichs werden dann die genannten Abladeparameter so gesteuert, dass die erfasste Ist-Dicke und/oder die erfasste Ist-Breite möglichst nahe an eine vorgegebene Soll-Dicke und/oder Soll-Breite herankommen oder idealerweise diesen entsprechen.

Die Entladesteuervorrichtung kann hierbei nicht nur die genannte Entladevorschubgeschwindigkeit und ggf. die Fahrgeschwindigkeit steuern, sondern auch andere Entladeparameter automatisch steuern oder zumindest halbautomatisch hierfür Vorschläge machen, anhand derer der Fahrer dann die Einstellungen vornehmen kann. Insbesondere kann die Entladesteuervorrichtung den Öffnungswinkel der Entladeklappe steuern, um die Dicke des abgelegten Erntegutteppichs zu beeinflussen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines Erntegutwagens nach einer Ausführung der Erfindung, die den kastenförmigen Laderaum und die heckseitig angeordnete Entladeklappe zeigt,
- Fig. 2:: eine schematische Heckansicht des Erntegutwagens aus Fig. 1,
- Fig. 3:: eine perspektivische, teilweise Heckansicht des Erntegutwagens aus den vorhergehenden Figuren mit für den Entladebetrieb geöffneter Entladeklappe,
- Fig. 4:: eine ausschnittsweise Seitenansicht des Heckbereichs des Erntegutwagens aus den vorhergehenden Figuren, wobei die Entladeklappe und der darin angeordnete Querförderer sowohl im geschlossenen Zustand als auch in der geöffneten Stellung gezeigt ist,
- Fig. 5:: eine schematische Seitenansicht eines Erntegutwagens ähnlich Fig. 1, bei dem die Breitenverstellvorrichtung einen Querförderer unter dem Laderaumboden bzw. an dem Laderaumboden im Bereich der Entladeöffnung aufweist, und
- Fig. 6:: eine ausschnittsweise Seitenansicht des Erntegutwagens aus Fig. 5, die die verstellbare Anordnung des Querförderers unter dem Laderaumboden zeigt.

Wie die Figuren zeigen, kann der Erntegutwagen 1 als Ladewagen ausgebildet sein, der als Anbaugerät an einen Schlepper anbaubar ist, insbesondere über eine Deichsel, und dessen Laderaum 5 über einen Rahmen 4 auf einem Fahrgestell 2 abgestützt ist, das Räder 3 umfasst. Der Erntegutwagen 1 kann dabei eine Aufnahmevorrichtung 7 beispielsweise in Form einer Pickup mit einer rotierenden Stachelwalze und einen Förderrotor 8 aufweisen, um Erntegut selbsttätig vom Boden aufsammeln und in den Laderaum 5 fördern zu können.

Der Erntegutwagen 1 kann jedoch auch als Häckselwagen ausgebildet sein und ohne eine solche Aufnahmevorrichtung auskommen, wobei ein solcher Häckselwagen typischerweise von oben her befüllt wird und hierzu der Laderaum 5 oben offen ausgebildet ist.

Der Erntegutwagen 1 kann im Inneren des Laderaums 5 einen Entladeförderer 6 beispielsweise in Form eines antreibbaren Kratzbodens aufweisen, um das geladene Erntegut zur heckseitigen Entladeöffnung fördern zu können.

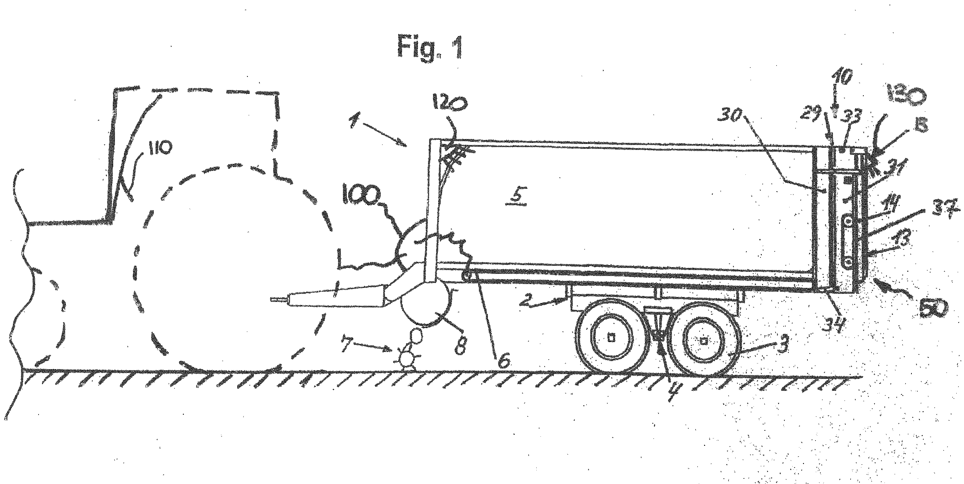

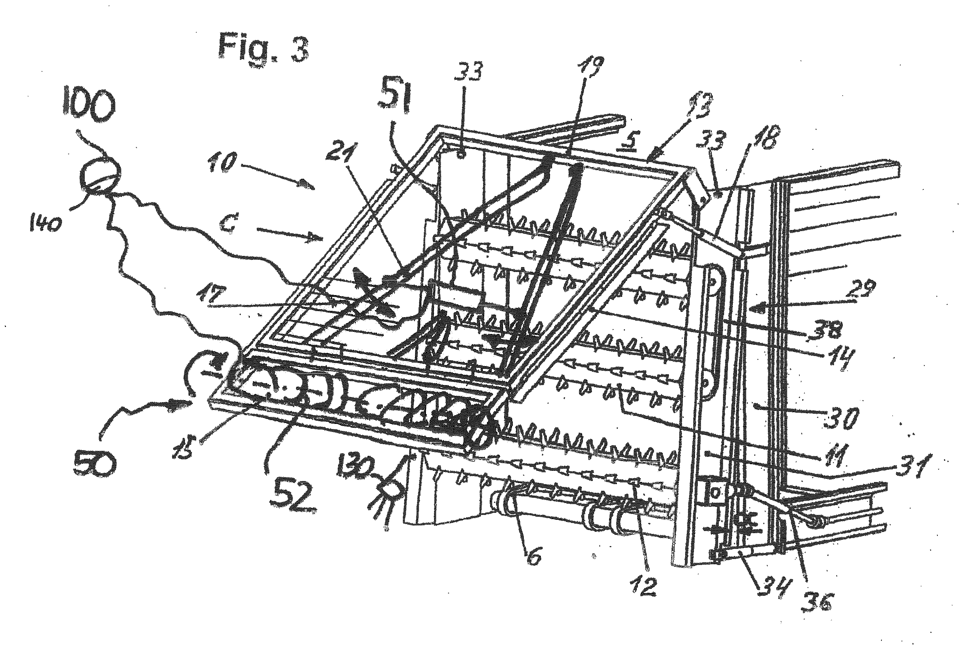

Die Entladeöffnung ist normalerweise durch eine Entladeklappe 13 verschlossen, wobei die genannte Entladeklappe durch einen Stellaktor 18 aufgeschwenkt werden kann, insbesondere um eine oben liegende Gelenkachse 33, vgl. Figuren 1 und 3.

Im Bereich der heckseitigen Entladeöffnung kann eine Dosiervorrichtung 10 mit mehreren antreibbaren Dosierwalzen 11 vorgesehen sein, zwischen denen das abzuladende Erntegut hindurch dosiert werden kann. Die genannten Dosierwalzen 11 können dabei liegend angeordnet bzw. um liegende Rotorachsen drehbar sein. Alternativ sind auch stehende Dosierwalzen, die um aufrechte Rotorachsen drehbar sind, möglich.

Beim Entladen des Ernteguts fördert einerseits der genannte Kratzboden das Erntegut auf die Dosiervorrichtung 10 zu, welche Dosiervorrichtung 10 angetrieben sein kann, um das Erntegut dosiert abzuladen.

Um die Breite des abzuladenden Erntegutteppichs zu steuern, umfasst der Erntegutwagen 1 eine Breitenverteilvorrichtung 50, die mehrere Verteilmittel aufweist.

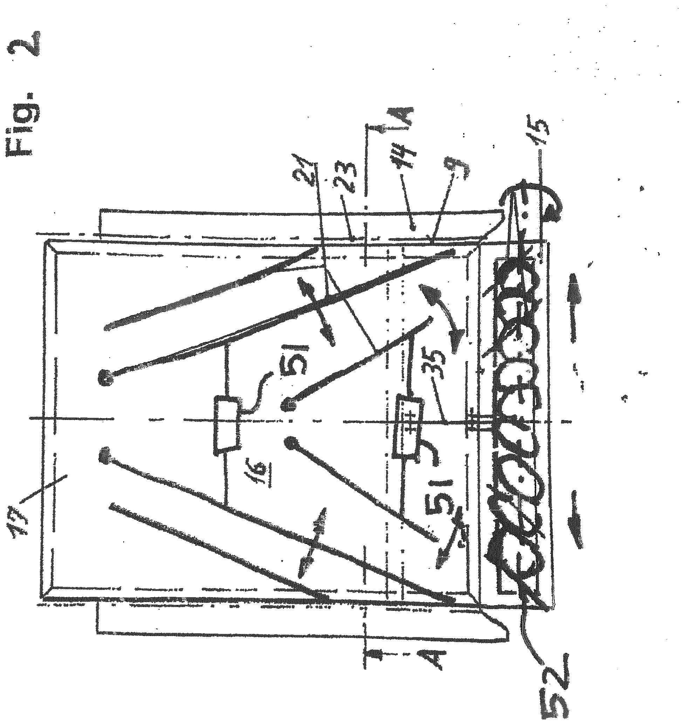

Zum einen kann die Breitenverstellvorrichtung 50 Führungsleisten 21 aufweisen, die an der Innenseite 16 der Entladeklappe 13 angeordnet sind und sich - grob gesprochen - entlang der Entladeklappe von oben nach unten erstrecken. Die genannten Führungsleisten 21 sind dabei in ihrem Anstellwinkel variabel und entsprechend verstellbar gelagert, beispielsweise um Schwenkachsen an ihren oberen Enden schwenkbar gelagert. Der Anstellwinkel der Führungsleisten 21 ist durch Stellaktoren 51 verstellbar, durch die die Führungsleisten 21 stärker oder weniger stark aufspreizbar sind. Um das Erntegut in die Breite auseinander zu ziehen, kann mittels der Stellaktoren 51, die beispielsweise Druckmittelzylinder oder Elektromotoren umfassen können, V-förmig aufspreizbar sein, so dass sich der Abstand der Führungsleisten von oben nach unten an der Entladeklappe vergrößert, vgl. Fig. 2. Umgekehrt könnten die Führungsleisten 21 auch zu einem stehenden V gespreizt werden, um das Erntegut zu einem schmäleren Teppich zusammenzuschieben.

Wie die Figuren zeigen, können die Stellaktoren 51 von einer Entladesteuervorrichtung 100 angesteuert werden, um die Führungsleisten entsprechend zu positionieren bzw. anzustellen, wobei die Entladesteuervorrichtung 100 ein Jobrechner sein kann, der an dem Erntegutwagen 1 selbst vorgesehen ist. Alternativ kann die Entladesteuervorrichtung 100 auch am Schlepper implementiert sein, der den Entladewagen 1 zieht.

Ferner kann die Breitenverstellvorrichtung 50 zumindest einen Querförderer 52 beispielsweise in Form eines Schneckenförderers aufweisen, der an einem unteren Endabschnitt der Entladeklappe 13 und/oder unter bzw. an dem Laderaumboden 5b angeordnet sein kann. Es können auch mehrere solcher Querförderer 52 beispielsweise in Form von Schneckenförderer übereinander an der Innenseite der Entladeklappe 13 verteilt oder an der Entladekante des Laderaumbodens 5b verteilt angeordnet sein.

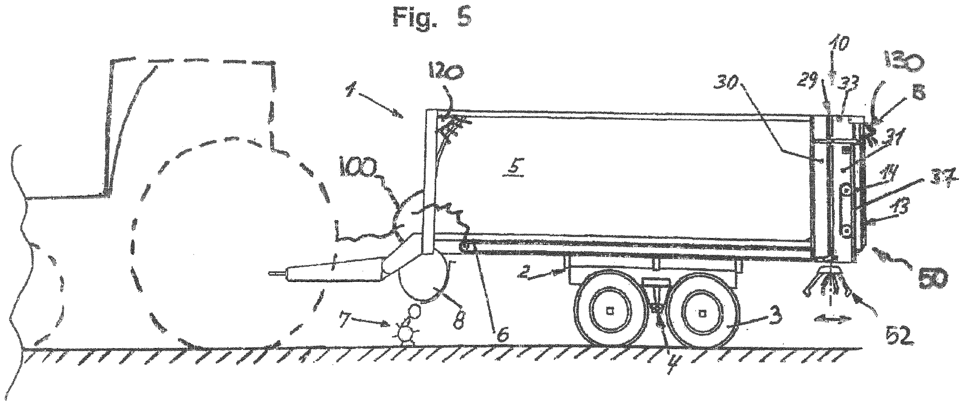

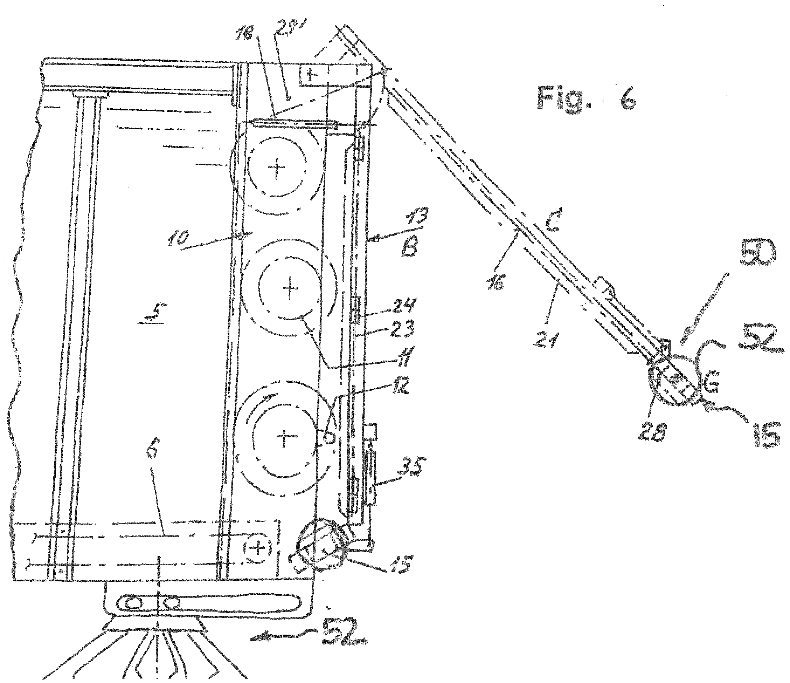

Wie die Figuren 5 und 6 zeigen, kann vorteilhafterweise ein solcher Querförderer 52 auch zwischen einer Aktivstellung unter dem Laderaumboden 5b und einer Aktivstellung, in der der Querförderer 52 über die Entladekante vorsteht und/oder - in einer Draufsicht auf den Erntegutwagen von oben her - über die Umrisskontur des Laderaumbodens 5b vorsteht und/oder sich höhenmäßig mit dem Laderaumboden 5b überlappt, hin und her beweglich gelagert sein. Beispielsweise kann der Querförderer 52 unter dem Laderaumboden 5b verschieblich gelagert sein, um zwischen der genannten Inaktivstellung und Aktivstellung hin und her verschoben werden zu können. Alternativ oder zusätzlich kann der Querförderer 52 aber auch schwenkbar am Laderaumboden 5b angeordnet sein, insbesondere um unter dem Laderaumboden weggeschwenkt und umgekehrt in die Aktivstellung hervorgeschwenkt werden zu können.

Wie die Figuren 5 und 6 zeigen, kann der Querförderer 52 dabei auch als Rechkreiseleinheit mit umlaufend antreibbaren Rechkreiseln ausgebildet sein, die beispielsweise um eine näherungsweise aufrechte Kreiselachse umlaufen können, wobei hier vorteilhafterweise mehrere solche Rechkreisel entlang der Entladekante verteilt angeordnet sein können. Vorteilhafterweise können solche mehreren Rechkreisel individuell oder gruppenweise in unterschiedlichen Drehrichtungen angetrieben werden, um das entladene Erntegut weiter nach außen oder weiter nach innen zu verbringen.
Alternativ oder zusätzlich zu solchen Rechkreiseln können als Querförderer aber auch ein Förderband bzw. mehrere Förderbänder oder auch ein Rollen- bzw. Walzenförderer mit antreibbaren Walzen Verwendung finden.

Die gezeigte Anordnung eines Querförderers 52 unter bzw. an dem Laderaumboden 5b ist auch für die schon beschriebenen Querförderschnecken möglich.

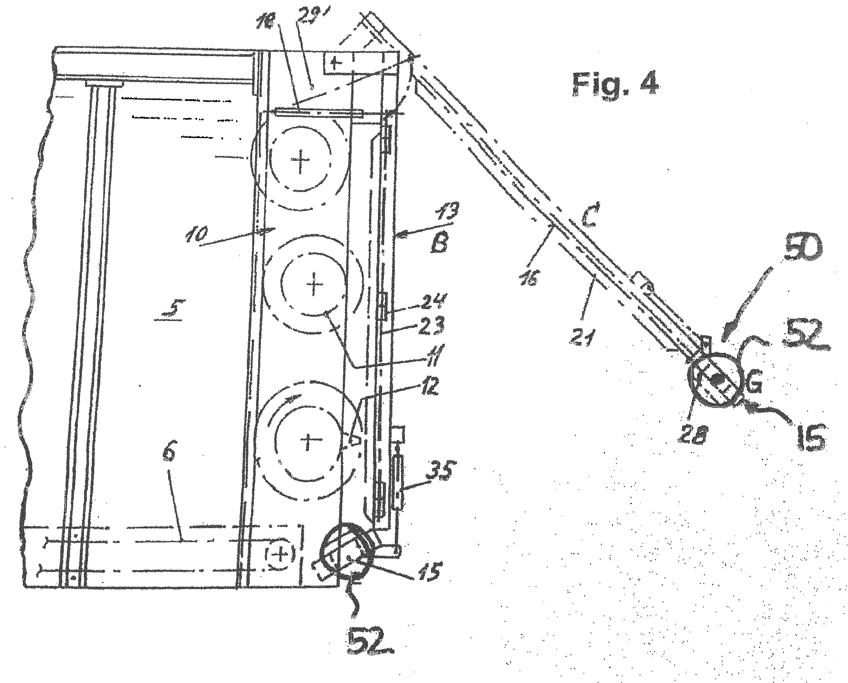

Wie Fig. 4 verdeutlicht, kann die Entladeklappe 13 in sich selbst verstellbar ausgebildet sein und mehrere zueinander verstellbare, insbesondere verschwenkbare Klappenabschnitte aufweisen. Insbesondere kann ein unterer Endabschnitt 15 der Entladeklappe 13 um eine liegende Querachse relativ zu einem darüber liegenden Klappenabschnitt verschwenkbar sein, wobei ein Stellaktor 35 vorgesehen sein kann, um die Klappenteile zueinander zu verschwenken, insbesondere den unteren Endabschnitt 15 zu verschwenken.

An dem verschwenkbaren Klappenabschnitt 15 kann der genannte Querförderer 52 angebracht sein, wobei der Querförderer 52 zwei Schneckenteile umfassen kann, die zueinander gegenläufig fördern und je nach Drehrichtung das Erntegut zu einem schmäleren Teppich zusammenfördern oder zu einem breiteren Teppich auseinander ziehen. Der Querförderantrieb des Querförderers 52 kann ebenfalls von der genannten Entladesteuervorrichtung 100 angesteuert werden, um die Querfördergeschwindigkeit variieren zu können und dadurch die Teppichbreite bzw. die Querförderwirkung verändern zu können.

Die genannte Entladesteuervorrichtung 100 kann ebenfalls die Stellung der Entladeklappe 13, insbesondere deren Aufschwenkwinkel beim Entladen steuern. Alternativ oder zusätzlich kann die Entladesteuervorrichtung 100 auch den Stellaktor 35 ansteuern, um den Schwenkwinkel des unteren Endabschnitts 15 und damit die Position des Querförderers 52 zu variieren.

Die Entladesteuervorrichtung 100 kann ferner die Entladevorschubgeschwindigkeit des Entladeförderers 6 in Form des Kratzbodens und/oder der Dosierwalzen steuern sowie hierfür ein Entladevorschubsignal vorgeben und vorteilhafterweise auch ein Fahrgeschwindigkeitssignal vorgeben, anhand dessen der Schlepperfahrer oder der Schlepper selbst die Fahrgeschwindigkeit automatisch steuern kann.

Vorteilhafterweise umfasst die Entladesteuervorrichtung 100 Eingabemittel beispielsweise in Form eines Touchscreens 110, um relevante Entladeparameter eingeben zu können, insbesondere eine Fahrsilolänge bzw. die Länge des Fahrwegs durch das Fahrsilo und/oder eine gewünschte Erntegutteppichdicke und/oder eine gewünschte Erntegutteppichbreite.

Vorteilhafterweise kann der Erntegutwagen 1 eine Erfassungseinrichtung 120 zum Erfassen der geladenen bzw. abzuladenden Erntegutmenge aufweisen. Diese Erfassungseinrichtung 120 kann einen Füllstandssensor und/oder einen Gewichtssensor umfassen und die Erntegutmenge im Laderaum 5 an die Entladesteuervorrichtung 100 melden bzw. abrufbar bereitstellen.

Ferner kann der Erntegutwagen 1 eine weitere Erfassungseinrichtung 130 aufweisen, die den abgeladenen Erntegutteppich hinsichtlich relevanter Teppichparameter erfasst, insbesondere die Teppichdicke und die Teppichbreite, wobei die genannte Erfassungseinrichtung 130 heckseitig am Erntegutwagen angeordnet und/oder den Abladebereich beobachten kann, um Ist-Werte der relevanten Teppichparameter bereitzustellen.

Die Entladesteuervorrichtung 100 kann den Erntegutwagen beim Entladen in verschiedenen Automatikstufen bzw. Automatikmodi steuern. Beispielsweise kann in der genannten Weise in einem Teach-in-Prozess ein erfahrener Schlepperfahrer den Entladevorgang manuell steuern, wobei die Entladesteuervorrichtung 100 die relevanten Entladeparameter, insbesondere die Entladevorschubgeschwindigkeit in Form der Kratzbodengeschwindigkeit, die Schlepperfahrgeschwindigkeit, die Entladeklappenstellung, die Anstellwinkel der Führungsleisten, die Position des Querförderers in Form des Klappwinkels des unteren Endabschnitts der Entladeklappe und die Querfördergeschwindigkeit erfasst und speichert. Die Erfassung kann dabei kontinuierlich über die Fahrstrecke durch das Fahrsilo erfolgen oder auch punktuell in vorbestimmten Abständen. In einem nachfolgenden Automatikbetrieb kann die Entladesteuervorrichtung 100 einige oder alle der genannten Entladeparameter automatisch steuern, insbesondere die Kratzbodengeschwindigkeit und die Einstellungen der Breitenverteilvorrichtung sowie die Stellung der Heckklappe und ggf. auch ein Fahrgeschwindigkeitssignal bereitstellen. In einem Halbautomatikbetrieb können für alle oder einen Teil der vorgenannten Stellgrößen Sollsignale vorgegeben und auf Anzeigemitteln angezeigt werden, anhand derer ein Maschinenführer dann den Abladeprozess steuern kann.

In einem alternativen Automatikmodus können über das Touchscreen 110 bzw. andere geeignete Eingabemittel relevante Entladegrößen wie beispielsweise die Fahrsilolänge, die gewünschte Teppichdicke und die gewünschte Teppichbreite ausgewählt bzw. eingegeben werden, wobei die Entladesteuervorrichtung 100 aus den vorgewählten Größen einige oder alle der anderen relevanten, einstellbaren Entladeparameter berechnet, insbesondere die Kratzbodengeschwindigkeit, die Heckklappenstellung und die Einstellungen der Breitenverteilvorrichtung wie beispielsweise die Fördergeschwindigkeit des Querförderers 52. Gegebenenfalls kann auch ein Fahrgeschwindigkeitssignal berechnet und bereitgestellt werden. Die Entladesteuervorrichtung 100 kann hierbei auch wiederum die Erntegutmenge berücksichtigen, die über die Erfassungseinrichtung 120 erfasst wurde oder ggf. auch manuell eingegeben werden kann, beispielsweise in Form eines Füllgrads des Laderaums.

Die Entladesteuervorrichtung 100 kann ferner einen Regler 140 umfassen, der einige oder alle der vorgenannten Entladeparameter in Abhängigkeit eines Soll-Ist-Wert-Vergleichs regelt. Insbesondere können die von der Erfassungseinrichtung 130 erfassten Ist-Werte der Teppichdicke und/oder Teppichbreite mit vorgegebenen Soll-Werten für die Teppichdicke und/oder Teppichbreite verglichen werden. Der Regler 140 regelt dann in Abhängigkeit des genannten Soll-Ist-Wert-Vergleichs insbesondere die Entladevorschubgeschwindigkeit des Entladeförderers 6 und/oder die variablen Parameter der Breitenverstellvorrichtung 50, beispielsweise den Spreizwinkel der Führungsleisten 21 und die Fördergeschwindigkeit des Querförderers 52 und/oder die Entladeklappenstellung und/oder die Fahrgeschwindigkeit des Schleppers.

## Patentansprüche

1. Landwirtschaftlicher Erntegutwagen mit einem Laderaum (5), einem Entladeförderer (6) zum Entladen von Erntegut aus dem Laderaum (5), sowie einer Breitenverteilvorrichtung (50) zum Beeinflussen der Breite des abzuladenden Erntegutteppichs, wobei die genannte Breitenverteilvorrichtung (50) während des Entladebetriebs variabel einstellbare aktive Verteilmittel (21, 52) umfassend zumindest einen Querförderer (52), der an einem unteren Endabschnitt einer Entladeklappe (13) des Erntegutwagens und/oder an einem Endabschnitt eines Laderaumbodens (5b) im Bereich der Entladeöffnung des Laderaums (5) vorgesehen und hinsichtlich seiner Querfördergeschwindigkeit einstellbar ausgebildet ist, **gekennzeichnet durch** eine Entladesteuervorrichtung (100), die dazu ausgebildet ist, relevante Breitenverteilparameter der Breitenverteilvorrichtung (50) umfassend zumindest die Querfördergeschwindigkeit des Querförderers (52) in Abhängigkeit eines vorwählbaren Sollwerts für die Breite des abzuladenden Erntegutteppichs automatisch zu steuern.

2. Landwirtschaftlicher Erntegutwagen nach dem vorhergehenden Anspruch, wobei der Querförderer (52) hinsichtlich seiner Position relativ zur Entladeöffnung des Laderaums (5) und/oder in seiner Höhe relativ zum Boden, auf dem der Erntegutteppich abzulegen ist, einstellbar ausgebildet ist.

3. Landwirtschaftlicher Erntegutwagen nach einem der vorhergehenden Ansprüche, wobei der Querförderer (52) einen Schneckenförderer mit zwei gegenläufig fördernden Schneckenabschnitten umfasst.

4. Landwirtschaftlicher Erntegutwagen nach einem der vorhergehenden Ansprüche, wobei der Querförderer (52) eine Rechkreiseleinheit mit umlaufend antreibbaren Rechzinken aufweist.

5. Landwirtschaftlicher Erntegutwagen nach einem der vorhergehenden Ansprüche, wobei der Querförderer (52) ein umlaufend antreibbares Förderband aufweist.

6. Landwirtschaftlicher Erntegutwagen nach einem der vorhergehenden Ansprüche, wobei der Querförderer (52) zwischen einer Inaktivstellung unter dem Laderaumboden (5b) und einer Aktivstellung im Bereich des aus der Entladeöffnung des Laderaums (5) austretenden Ernteguts hin und her bewegbar gelagert ist.

7. Landwirtschaftlicher Erntegutwagen nach einem der vorhergehenden Ansprüche, wobei an einer Entladeklappeninnenseite Führungsleisten (21) vorgesehen sind, die durch einen Stellaktor (51) im Entladebetrieb hinsichtlich ihres Anstellwinkels gegenüber der Abladeförderrichtung des Ernteguts während des Entladevorgangs variabel einstellbar ausgeildet, und in verschieden stark gespreizte V-Stellungen bringbar sind.

8. Landwirtschaftlicher Erntegutwagen nach einem der vorhergehenden Ansprüche, wobei eine in sich verstellbare ausgebildete Entladeklappe vorgesehen ist, die einen unteren Endabschnitt (15) aufweist, der um eine liegende Querachse gegenüber einem angrenzenden Entladeklappenabschnitt durch einen Stellaktor (35) verstellbar ist, wobei der genannte untere Endabschnitt (15) den antreibbaren Querförderer (52) aufweist, wobei die Entladesteuervorrichtung (100) dazu ausgebildet ist, einen Entladeklappenanstellwinkel und/oder eine Entladeklappenstellung in Abhängigkeit zumindest eines weiteren Entladeparameters automatisch zu steuern, wobei der zumindest eine weitere Entladeparameter zumindest einen vorgebbaren Soll-Wert einer Erntegutteppichdicke umfasst.

9. Landwirtschaftlicher Erntegutwagen nach einem der vorhergehenden Ansprüche, wobei die Entladesteuervorrichtung (100) zum automatischen Steuern der Entladevorschubgeschwindigkeit des Entladeförderers (6) in Abhängigkeit der Fahrgeschwindigkeit des Erntegutwagens und/oder zum automatischen Steuern der Fahrgeschwindigkeit des Erntegutwagens in Abhängigkeit der Entladevorschubgeschwindigkeit des Entladeförderers (6) vorgesehen ist, wobei die Entladesteuervorrichtung (100) Eingabemittel zum Eingeben und/oder Auswählen zumindest eines vorwählbaren Parameters aus der Parametergruppe umfassend Fahrweglänge durch das Fahrsilo, Erntegutteppichdicke und Erntegutteppichbreite aufweist und dazu ausgebildet ist, die Entladevorschubgeschwindigkeit des Entladeförderers (6) und/oder ein Fahrgeschwindigkeitssignal in Abhängigkeit des eingegebenen, zumindest einen Parameters aus der Parametergruppe umfassend Fahrweglänge durch das Fahrsilo, Erntegutteppichdicke und Erntegutteppichbreite automatisch zu steuern.

10. Landwirtschaftlicher Erntegutwagen nach einem der vorhergehenden Ansprüche, wobei eine Erfassungseinrichtung (120) zum Erfassen der im Laderaum (5) geladenen Erntegutmenge vorgesehen ist, wobei die Entladesteuervorrichtung (100) dazu ausgebildet ist, in Abhängigkeit der erfassten Erntegutmenge die Entladevorschubgeschwindigkeit des Entladeförderers (6) und/oder die Fahrgeschwindigkeit des Erntegutwagens automatisch zu steuern.

11. Landwirtschaftlicher Erntegutwagen nach einem der vorhergehenden Ansprüche, wobei die Entladesteuervorrichtung (100) einen Teach-in-Betriebsmodus aufweist, in dem während eines manuell gesteuerten Entladevorgangs relevante Entladeparameter umfassend zumindest die Entladevorschubgeschwindigkeit des Entladeförderers (6), einen Parameter der Breitenverteilvorrichtung (50) und die Fahrgeschwindigkeit des Erntegutwagens entlang der Entladestrecke erfasst und gespeichert werden, wobei die Entladesteuervorrichtung (100) einen Automatikbetriebsmodus aufweist, in dem relevante Entladeparameter umfassend zumindest die Einstellung der Breitenverteilvorrichtung (50), die Entladevorschubgeschwindigkeit des Entladeförderers (6) und ggf. zusätzlich die Fahrgeschwindigkeit des Erntegutwagens in Abhängigkeit der im Teach-in-Betriebsmodus gespeicherten Entladeparameter automatisch gesteuert werden.

12. Landwirtschaftlicher Erntegutwagen nach einem der vorhergehenden Ansprüche, wobei eine Erfassungseinrichtung (130) zum Erfassen des Ist-Werts zumindest eines Parameters des abgeladenen Erntegutteppichs vorgesehen ist, wobei die Entladesteuervorrichtung (100) einen Regler (140) zum Regeln zumindest eines Entladeparameters umfassend zumindest die Einstellung der Breitenverteilvorrichtung (5) und die Entladevorschubgeschwindigkeit des Entladeförderers (6) in Abhängigkeit eines Vergleichs zwischen dem erfassten Ist-Werts des genannten zumindest einen Parameters des abgeladenen Erntegutteppichs und eines vorgebbaren SollWerts dieses Parameters des abgeladenen Erntegutteppichs aufweist, wobei die Erfassungseinrichtung (130) einen Abladebereich des Erntegutwagens beobachtet und dazu ausgebildet ist, eine Teppichbreite und/oder Teppichdicke des abgeladenen Erntegutteppichs zu erfassen, wobei der Regler (140) dazu ausgebildet ist, zumindest die Einstellung der Breitenverteilvorrichtung (50) und die Entladevorschubgeschwindigkeit des Entladeförderers (6) in Abhängigkeit eines Soll-Ist-Wert-Vergleichs der Teppichdicke und/oder eines Soll-Ist-Wert-Vergleichs der Teppichbreite zu regeln.

13. Landwirtschaftlicher Erntegutwagen nach einem der vorhergehenden Ansprüche, wobei eine Erfassungseinrichtung (130) zum Erfassen der Teppichbreite des abgelegten Erntegutteppichs sowie ein Regler (140) zum Regeln der Querfördergeschwindigkeit des Querförderers (52) in Abhängigkeit einer Differenz zwischen der erfaßten Teppichbreite und einem vorwählbaren Sollwert der Teppichbreite vorgesehen sind.

14. Verfahren zum Entladen eines Erntegutwagens (1) zum Erzeugen eines Erntegutteppichs in einem Fahrsilo, bei dem durch einen Entladeförderer (6) aus einem Laderaum (5) des Erntegutwagens (1) Erntegut entladen wird, während der Erntegutwagen (1) entlang eines Fahrwegs durch das Fahrsilo gefahren wird, **dadurch gekennzeichnet, dass** von einer Entladesteuervorrichtung (100) relevante Breitenverteilparameter einer Breitenverteilvorrichtung (50) umfassend zumindest eine Querfördergeschwindigkeit eines Querförderers (52) und/oder einen Führungsleistenanstellwinkel von Führungsleisten (21) an einer Entladeklappe (13) in Abhängigkeit eines vorwählbaren Sollwerts für die Breite des abzuladenden Erntegutteppichs automatisch gesteuert wird.

15. Verfahren nach dem vorhergehenden Anspruch, wobei von der Entladesteuervorrichtung (100) die Entladevorschubgeschwindigkeit des Entladeförderers (6) in Abhängigkeit der Fahrgeschwindigkeit des Erntegutwagens (1) automatisch gesteuert wird oder die Fahrgeschwindigkeit des Erntegutwagens (1) in Abhängigkeit der Entladevorschubgeschwindigkeit des Entladeförderers (6) automatisch gesteuert wird, wobei die Entladevorschubgeschwindigkeit und/oder die Fahrgeschwindigkeit in Abhängigkeit zumindest eines vorwählbaren Parameters aus der Parametergruppe umfassend Fahrweglänge durch das Fahrsilo, Erntgutteppichdicke und Erntegutteppichbreite automatisch gesteuert wird, wobei eine Beladung des Erntegutwagens (1) von einer Erfassungseinrichtung (120) bestimmt wird und die Entladevorschubgeschwindigkeit des Entladeförderers (6) und/oder die Fahrgeschwindigkeit des Erntegutwagens (1) automatisch in Abhängigkeit der erfassten Beladung gesteuert wird, wobei während eines manuell gesteuerten Entladevorgangs in einem Teach-in-Modus die Entladevorschubgeschwindigkeit und/oder die Fahrgeschwindigkeit entlang des Fahrwegs erfasst wird und in einem automatisch gesteuerten, späteren Entladevorgang die Entladevorschubgeschwindigkeit und/oder die Fahrgeschwindigkeit anhand der im Teach-in-Modus erfassten und gespeicherten Entladevorschubgeschwindigkeit und/oder Fahrgeschwindigkeit gesteuert wird, wobei von einer Erfassungseinrichtung (130) eine Ist-Dicke und/oder eine Ist-Breite des abgelegten Erntegutteppichs erfasst wird und in Abhängigkeit einer Differenz der Ist-Dicke von einer Soll-Dicke und/oder der Ist-Breite von einer Soll-Breite die Entladevorschubgeschwindigkeit und/oder eine Breitenverteilervorrichtung automatisch gesteuert wird.

## Claims

1. Agricultural crop carriage having a loading space (5), an unloading conveyor (6) for unloading crop from the loading space (5), as well as a width-distribution device (50) for influencing the width of the crop mat to be unloaded, wherein said width distribution device (50) during the unloading operation has variably adjustable active distribution means (21, 52) including at least one transverse conveyor (52) provided on a lower end portion of an unloading flap (13) of the crop carriage und/or on an end portion of a loading space floor (5b) in the area of the unloading opening of the loading space (5c) and which is configured adjustably in its transverse conveying speed, **characterized by** an unloading control device (100) which is configured for the automated control of relevant width-distribution parameters of the width distribution device (50) including at least the transverse conveying speed of the transverse conveyor (52) depending on a pre-selectable target value for the width of the crop mat to be unloaded.

2. Agricultural crop carriage according to the preceding claim, wherein the transverse conveyor (52) is configured adjustably in its position relative to the unloading opening of the loading space (5) and/or in its height relative to the ground onto which the crop mat is to be placed.

3. Agricultural crop carriage according to one of the preceding claims, wherein the transverse conveyor (52) includes a screw conveyor with two counterrotating conveying screw sections.

4. Agricultural crop carriage according to one of the preceding claims, wherein the transverse conveyor (52) comprises a rake unit with circumferentially-drivable raking tines.

5. Agricultural crop carriage according to one of the preceding claims, wherein the transverse conveyor (52) comprises a circumferentially-drivable conveyor belt.

6. Agricultural crop carriage according to one of the preceding claims, wherein the transverse conveyor (52) is mounted in a manner to be movable back and forth between an inactive position below the loading space floor (5b) and an active position in the area of the harvested material exiting the unloading opening of the loading space (5).

7. Agricultural crop carriage according to one of the preceding claims, wherein guide rails (21) are provided on the inner side of the unloading flap, which are configured to be adjustable by means of an actuator (51) during the unloading operation in their setting angle with respect to the unloading conveying direction of the harvested material, and which can be brought in V-positions with different extents of spreading.

8. Agricultural crop carriage according to one of the preceding claims, wherein an unloading flap of *per se* adjustable configuration is provided, which comprises a lower end portion (15) adjustable about a horizontal transverse axis with respect to an adjacent unloading flap portion by means of an actuator (35), wherein said lower end portion (15) comprises the drivable transverse conveyor (52), wherein the unloading control device (100) is configured for automated control of an unloading flap setting angle and/or an unloading flap setting position depending on at least one further unloading parameter, wherein the at least one further unloading parameter includes at least one pre-definable target value of a crop mat thickness.

9. Agricultural crop carriage according to one of the preceding claims, wherein the unloading control device (100) is provided for the automated control of the unloading thrust speed of the unloading conveyor (6) depending on the driving speed of the crop carriage and/or for the automated control of the driving speed of the crop carriage depending on the unloading thrust speed of the unloading conveyor (6), wherein the unloading control device (100) comprises input means for inputting and/or selecting at least one pre-definable parameter from the parameter group including travel path length through the bunker silo, thickness of crop mat and width of crop mat, and is configured for the automated control of the unloading thrust speed of the unloading conveyor (6) and/or a driving speed signal depending on the inputted, at least one parameter from the parameter group including travel path length through the bunker silo, thickness of crop mat and width of crop mat.

10. Agricultural crop carriage according to one of the preceding claims, wherein a detection means (120) for detecting the amount of harvested material loaded inside the loading space (5) is provided, wherein the unloading control device (100) is configured for the automated control of the unloading thrust speed of the unloading conveyor (6) and/or the driving speed of the crop carriage dependent upon the detected amount of harvested material.

11. Agricultural crop carriage according to one of the preceding claims, wherein the unloading control device (100) includes a teach-in operating mode, in which during a manually-controlled unloading operation, relevant operating parameters at least including the unloading thrust speed of the unloading conveyor (6), a parameter of the width distribution device (50) and the driving speed of the crop carriage along the unloading distance are detected and stored, wherein the unloading control device (100) includes an automated operating mode, in which relevant unloading parameters at least including the setting of the width distribution device (50), the unloading thrust speed of the unloading conveyor (6) and optionally additionally the driving speed of the crop carriage are automatically controlled depending on the unloading parameters stored in the teach-in operating mode.

12. Agricultural crop carriage according to one of the preceding claims, wherein a detection device (130) for detecting the actual value of at least one parameter of the unloaded crop mat is provided, wherein the unloading control device (100) includes a controller (140) for regulating at least one unloading parameter including at least the setting of the width distribution device (5) and the unloading thrust speed of the unloading conveyor (6) depending on a comparison between the detected actual value of the mentioned at least one parameter of the unloaded crop mat and a pre-definable target value of said parameter of the unloaded crop mat, wherein the detection device (130) observes an unloading area of the crop carriage and is configured for detecting a mat width and/or a mat thickness of the unloaded crop mat, wherein the controller (140) is configured to regulate at least the setting of the width distribution device (50) and the unloading thrust speed of the unloading conveyor (6) depending on comparison between target value and actual value of the mat thickness and/or a comparison between target value and actual value of the mat width.

13. Agricultural crop carriage according to one of the preceding claims, wherein a detection device (130) for detecting the mat width of the placed crop mat as well as a controller (140) for regulating the transverse conveying speed of the transverse conveyor (52) depending on a difference between the detected mat width and a pre-selectable target value of the mat width are provided.

14. Method for unloading a crop carriage (1) for producing a crop mat in a bunker silo, in which harvested material is unloaded from a loading space (5) of the crop carriage (1) by means of an unloading conveyor (6) while the crop carriage (1) travels along a travel path through the bunker silo, **characterized in that** relevant width-distribution parameters of a width distribution device (50) including at least a transverse conveying speed of a transverse conveyor (52) and/or a guide rail setting angle of guide rails (21) on an unloading flap (13) are automatically controlled depending on a pre-definable target value for the width of the crop mat to be unloaded.

15. Method according to the preceding claim, wherein the unloading thrust speed of the unloading conveyor (6) is automatically controlled by the unloading control device (100) depending on the travel speed of the crop carriage (1), or the travel speed of the crop carriage (1) is automatically controlled depending on the unloading thrust speed of the unloading conveyor (6), wherein the unloading thrust speed and/or the travel speed are controlled depending on at least one pre-selectable parameter from the parameter group including travel path length through the bunker silo, thickness of crop mat and width of crop mat, wherein a loading of the crop carriage (1) is determined by a detection means (120) and the unloading thrust speed of the unloading conveyor (6) and/or the travel speed of the crop carriage (1) is automatically controlled depending on the detected loading, wherein, during a manually-operated unloading operation, the unloading thrust speed and/or the travel speed is detected along the travel path in a teach-in mode and, in an automatically-controlled later unloading operation, the unloading thrust speed and/or the travel speed is controlled by means of the unloading thrust speed and/or travel speed detected and stored in the teach-in mode, wherein an actual thickness and/or an actual width of the placed crop mat is detected by a detection means (130) and the unloading thrust speed and/or a width distribution device is automatically controlled depending on a difference of the actual thickness from a target thickness and/or the actual width from a target width.

## Revendications

1. Engin de récolte agricole avec un espace de chargement (5), un convoyeur de déchargement (6) servant à décharger la récolte hors de l'espace de chargement (5), ainsi qu'un dispositif de répartition en largeur (50) servant à influencer la largeur du tapis de récolte à décharger, dans lequel ledit dispositif de répartition en largeur (50) présente des moyens de répartition (21, 52) actifs pouvant être réglés de manière variable pendant le mode de déchargement, comprenant au moins un convoyeur transversal (52), qui est prévu au niveau d'une section d'extrémité inférieure d'une trappe de déchargement (13) de l'engin de récolte et/ou au niveau d'une section d'extrémité d'un fond d'espace de chargement (5b) dans la zone de l'ouverture de déchargement de l'espace de chargement (5) et est réalisé de manière à pouvoir être réglé en ce qui concerne sa vitesse de convoyage transversal, **caractérisé par** un dispositif de commande de déchargement (100), qui est configuré pour commander automatiquement des paramètres de répartition en largeur importants du dispositif de répartition en largeur (50) comprenant au moins la vitesse de convoyage transversal du convoyeur transversal (52) en fonction d'une valeur théorique pouvant être sélectionnée au préalable pour la largeur du tapis de récolte à décharger.

2. Engin de récolte agricole selon la revendication précédente, dans lequel le convoyeur transversal (52) est configuré de manière à pouvoir être réglé en ce qui concerne sa position par rapport à l'ouverture de déchargement de l'espace de chargement (5) et/ou dans sa hauteur par rapport au sol, sur lequel la tapis de récolte est à déposer.

3. Engin de récolte agricole selon l'une quelconque des revendications précédentes, dans lequel le convoyeur transversal (52) comprend un convoyeur à vis sans fin avec deux sections de vis sans fin convoyant en sens opposé.

4. Engin de récolte agricole selon l'une quelconque des revendications précédentes, dans lequel le convoyeur transversal (52) présente une unité formant toupie de ratissage avec des dents de ratissage pouvant être entraînées en rotation.

5. Engin de récolte agricole selon l'une quelconque des revendications précédentes, dans lequel le convoyeur transversal (52) présente une bande de convoyage pouvant être entraînée en rotation.

6. Engin de récolte agricole selon l'une quelconque des revendications précédentes, dans lequel le convoyeur transversal (52) est monté de manière à pouvoir être déplacé en va-et-vient entre une position inactive sous le fond de l'espace de chargement (5b) et une position active dans la zone de la récolte sortant hors de l'ouverture de déchargement de l'espace de chargement (5).

7. Engin de récolte agricole selon l'une quelconque des revendications précédentes, dans lequel des baguettes de guidage (21) sont prévues au niveau d'un côté intérieur de trappe de déchargement, qui sont configurées de manière à pouvoir être réglées de manière variable par un actionneur de réglage (51) dans le mode de déchargement eu égard à leur angle d'attaque par rapport à la direction de convoyage de déchargement de la récolte pendant l'opération de déchargement et peuvent être amenées dans des positions en V différentes fortement écartées.

8. Engin de récolte agricole selon l'une quelconque des revendications précédentes, dans lequel est prévue une trappe de déchargement réalisée de manière à pouvoir être ajustée en soi, qui présente une section d'extrémité inférieure (15), qui peut être ajustée par un actionneur de réglage (35) autour d'un axe transversal horizontal par rapport à une section de trappe de déchargement adjacente, dans lequel ladite section d'extrémité inférieure (15) présente le convoyeur transversal (52) pouvant être entraîné, dans lequel le dispositif de commande de déchargement (100) est configuré pour commander automatiquement un angle d'attaque de trappe de déchargement et/ou une position de trappe de déchargement en fonction d'au moins un autre paramètre de déchargement, dans lequel l'au moins un autre paramètre de déchargement comprend au moins une valeur théorique pouvant être spécifiée d'une épaisseur de tapis de récolte.

9. Engin de récolte agricole selon l'une quelconque des revendications précédentes, dans lequel le dispositif de commande de déchargement (100) est prévu pour commander automatiquement la vitesse d'avancement de déchargement du convoyeur de déchargement (6) en fonction de la vitesse de déplacement de l'engin de récolte et/ou pour commander automatiquement la vitesse de déplacement de l'engin de récolte en fonction de la vitesse d'avancement de déchargement du convoyeur de déchargement (6), dans lequel le dispositif de commande de déchargement (100) présente des moyens d'entrée servant à entrer et/ou à sélectionner au moins un paramètre pouvant être sélectionné au préalable parmi le groupe de paramètres comprenant la longueur de parcours à travers le silo mobile, l'épaisseur de tapis de récolte et la largeur de tapis de récolte et est conçu pour commander automatiquement la vitesse d'avancement de déchargement du convoyeur de déchargement (6) et/ou un signal de vitesse de déplacement en fonction de l'au moins un paramètre entré parmi le groupe de paramètres comprenant la longueur de parcours à travers le silo mobile, l'épaisseur de tapis de récolte et la largeur de tapis de récolte.

10. Engin de récolte agricole selon l'une quelconque des revendications précédentes, dans lequel un système de détection (120) est prévu pour détecter la quantité de récolte chargée dans l'espace de chargement (5), dans lequel le dispositif de commande de déchargement (100) est conçu pour commander automatiquement en fonction de la quantité de récolte détectée la vitesse d'avancement de déchargement du convoyeur de déchargement (6) et/ou la vitesse de déplacement de l'engin de récolte.

11. Engin de récolte agricole selon l'une quelconque des revendications précédentes, dans lequel le dispositif de commande de déchargement (100) présente un mode de programmation par apprentissage, dans lequel des paramètres de déchargement importants comprenant au moins la vitesse d'avancement de déchargement du convoyeur de déchargement (6), un paramètre du dispositif de répartition en largeur (50) et la vitesse de déplacement de l'engin de récolte le long de la voie de déchargement sont détectés et mémorisés pendant une opération de déchargement commandée manuellement, dans lequel le dispositif de commande de déchargement (100) présente un mode de fonctionnement automatique, dans lequel des paramètres de déchargement importants comprenant au moins le réglage du dispositif de répartition en largeur (50), la vitesse d'avancement de déchargement du convoyeur de déchargement (6) et éventuellement en supplément la vitesse de déplacement de l'engin de récolte sont commandés automatiquement en fonction des paramètres de déchargement mémorisés dans le mode de programmation par apprentissage.

12. Engin de récolte agricole selon l'une quelconque des revendications précédentes, dans lequel un système de détection (130) est prévu pour détecter la valeur réelle d'au moins un paramètre du tapis de récolte déchargé, dans lequel le dispositif de commande de déchargement (100) présente un régulateur (140) servant à réguler au moins un paramètre de déchargement comprenant au moins le réglage du dispositif de répartition en largeur (5) et la vitesse d'avancement de déchargement du convoyeur de déchargement (6) en fonction d'une comparaison entre la valeur réelle détectée dudit au moins un paramètre du tapis de récolte déchargé et une valeur théorique pouvant être spécifiée dudit paramètre du tapis de récolte déchargé, dans lequel le système de détection (130) observe une zone de déchargement de l'engin de récolte et est configuré pour détecter une largeur de tapis et/ou une épaisseur de tapis du tapis de récolte déchargé, dans lequel le régulateur (140) est configuré pour réguler au moins le réglage du dispositif de répartition en largeur (50) et la vitesse d'avancement de déchargement du convoyeur de déchargement (6) en fonction d'une comparaison de valeur théorique-réelle de l'épaisseur de tapis et/ou d'une comparaison de valeur théorique-réelle de la largeur de tapis.

13. Engin de récolte agricole selon l'une quelconque des revendications précédentes, dans lequel sont prévus un système de détection (130) servant à détecter la largeur de tapis du tapis de récolte déposé ainsi qu'un régulateur (140) servant à réguler la vitesse de convoyage transversal du convoyeur transversal (52) en fonction d'une différence entre la largeur de tapis détectée et une valeur théorique pouvant être sélectionnée au préalable de la largeur de tapis.

14. Procédé servant à décharger un engin de récolte (1) servant à produire un tapis de récolte dans un silo mobile, où la récolte est déchargée par un convoyeur de déchargement (6) hors d'un espace de chargement (5) de l'engin de récolte (1), pendant que l'engin de récolte (1) est déplacé le long d'un parcours à travers le silo mobile, **caractérisé en ce que** des paramètres de répartition en largeur importants d'un dispositif de répartition en largeur (50) comprenant au moins une vitesse de convoyage transversale d'un convoyeur transversal (52) et/ou un angle d'attaque de baguette de guidage de baguettes de guidage (21) au niveau d'une trappe de déchargement (13) sont commandés automatiquement en fonction d'une valeur théorique pouvant être sélectionnée au préalable pour la largeur du tapis de récolte à décharger par un dispositif de commande de déchargement (100).

15. Procédé selon la revendication précédente, dans lequel la vitesse d'avancement de déchargement du convoyeur de déchargement (6) est commandée automatiquement en fonction de la vitesse de déplacement de l'engin de récolte (1) ou la vitesse de déplacement de l'engin de récolte (1) est commandée automatiquement en fonction de la vitesse d'avancement de déchargement du convoyeur de déchargement (6) par le dispositif de commande de déchargement (100), dans lequel la vitesse d'avancement de déchargement et/ou la vitesse de déplacement sont commandées automatiquement en fonction d'au moins un paramètre pouvant être sélectionné au préalable parmi le groupe de paramètres comprenant la longueur de parcours à travers le silo mobile, l'épaisseur de tapis de récolte et la largeur de tapis de récolte, dans lequel un chargement de l'engin de récolte (1) est défini par un système de détection (120) et la vitesse d'avancement de déchargement du convoyeur de déchargement (6) et/ou la vitesse de déplacement de l'engin de récolte (1) sont commandées automatiquement en fonction du chargement détecté, dans lequel la vitesse d'avancement de déchargement et/ou la vitesse de déplacement le long du parcours sont détectées pendant une opération de déchargement commandée manuellement dans un mode de programmation par apprentissage et la vitesse d'avancement de déchargement et/ou la vitesse de déplacement sont commandées à l'aide de la vitesse d'avancement de déchargement et/ou de la vitesse de déplacement détectées et mémorisées dans le mode de programmation par apprentissage dans une opération de déchargement ultérieure commandée automatiquement, dans lequel une épaisseur réelle et/ou une largeur réelle du tapis de récolte déposé sont détectées par un système de détection (130) et la vitesse d'avancement de déchargement et/ou un dispositif de répartition en largeur sont commandés automatiquement en fonction d'une différence entre l'épaisseur réelle et une épaisseur théorique et/ou entre la largeur réelle et une largeur théorique.
